# FASCICULE DE BREVET EUROPEEN

(11) **EP 0 888 519 B1**
(45) Date de publication et mention de la délivrance du brevet: **19.01.2000**
(21) Numéro de dépôt: 97903560.7
(22) Date de dépôt: 10.03.1997
(51) Int. Cl.: F26B 23/02, F26B 3/00, C05F 9/02, C05F 3/06

(54) **REACTEUR BIOMECANIQUE D'HYDROLYSE POUR TRAITEMENT ET TRANSFORMATION DE LA BIOMASSE EN NOUVEAUX PRODUITS INDUSTRIELS**
BIOMECHANISCHER HYDROLYSIERREAKTOR ZUR UMWANDLUNG VON BIOMASSE IN NEUE INDUSTRIELLE VERBINDUNGEN
BIOMECHANICAL HYDROLYSIS REACTOR FOR PROCESSING AND CONVERTING A BIOMASS INTO NOVEL INDUSTRIAL PRODUCTS

(30) Priorité: 08.03.1996 FR 9602915
(43) Date de publication de la demande: 07.01.1999
(73) Titulaire: Heniqui, Gérard, 1466 Luxembourg (LU)
(72) Inventeur: Heniqui, Gérard, 1466 Luxembourg (LU)
(74) Mandataire: Kügele, Bernhard
(86) Numéro de dépôt international: IB9700232
(87) Numéro de publication internationale: WO9733133

(56) Documents cités:
- FR-A- 2 399 395
- FR-A- 2 490 114
- FR-A- 2 565 466
- US-A- 4 756 092
- DATABASE WPI Section Ch, Week 8107 Derwent Publications Ltd., London, GB; Class J08, AN 81-11053D XP002034640 & SU 739 317 B (MOSCOW CHEM EQUIP INST) , 15 Juin 1980

## Description

La présente invention concerne un dispositif pour le traitement de matières par hydrolyse, stérilisation et déshydratation, et en particulier un dispositif de type réacteur pour la transformation de matières organiques, végétales et/ou animales, en nouveaux produits réutilisables par l'industrie.

Les traitements de matières organiques et notamment la transformation des déchets d'abattoir provenant d'animaux sains, en farines animales, sont actuellement réalisés par des dispositifs de type autocuiseurs avec systèmes d'agitation et de broyage (par exemple : vis d'archimède ou arbre équipé de bras et de patins) ou non, avec montée aléatoire à faible pression (1,5 bar) ou non, avec maintien en palier de cette pression ou non, avec chauffage indirect ou non de la matière à traiter par circulation de gaz et de vapeurs chauds circulant dans une double enveloppe équipée ou non de carneaux fixés autour de l'enceinte intérieure ou par injection directe de gaz chauds et de vapeurs dans la matière à traiter ou non. De tels équipements et dispositifs existent sur la marché mais ils ne peuvent pas répondre, par exemple, aux exigences de la norme de la Commission Européenne (CEE 259/93, février 1993 et compléments) qui préconisent durant ces procédés de fabrication de farine animale, au moins des chauffages à 133°, à une pression de 3,5 bar pendant 20 mn. Jusqu'à présent, ces dispositifs autocuiseurs ne peuvent pas garantir la neutralisation de l'agent infectieux responsable de la maladie de Creuzfeld-Jacobs.

Cependant, l'utilisation d'extensions périphériques à ces autocuiseurs nécessite des procédés de traitements longs (parfois plusieurs jours) avec des consommations d'énergie très importantes pour des rendements faibles. D'autre part, ces dispositifs ne permettent pas une réelle transformation de la matière et la destruction de tous les vecteurs contaminants, car ils sont limités, de par leur structure d'autocuiseur, par les relations liant les paramètres de pression, de température et de durée, les uns aux autres (vapeurs saturées). Ce type de dispositifs ne permettent donc pas des réelles transformations de matières en produits nouveaux avec une excellente qualité bactériologique constante.

Il existe donc un réel besoin d'un dispositif dans lequel ces paramètres puissent être contrôlés indépendamment les uns des autres, de manière à pouvoir réaliser une réelle transformation de la matière intrante en produits nouveaux industriels qui aient une parfaite qualité bactériologique, sans laisser de résidus, et tout en préservant leur environnement d'agents polluants.

La présente invention permet de répondre à ce besoin et propose un dispositif permettant de réaliser de telles transformations en produits de qualité bactériologique parfaite, quelles que soient les matières biologiques initiales et leur degré de contamination, de manière automatique, avec une faible consommation d'énergie et sans résidus.

Ce but est atteint avec le dispositif selon l'invention de traitement et de transformation de matière organique, végétale et/ou animale, comportant une enveloppe extérieure et une enveloppe intérieure, l'enveloppe intérieure recevant la matière à traiter et à transformer, un rotor de malaxage entraîné par un moteur, un conduit de chargement de matière dans l'enveloppe intérieure, un conduit d'évacuation des gaz et au moins un conduit d'injection de gaz, qui est caractérisé en ce qu'il comporte :
. une première source de chauffage comportant un dispositif de chauffage et un système de conduits permettant le chauffage de l'enveloppe intérieure par circulation, sur ses parois, de gaz ou d'un fluide caloporteur dont la température est commandée par le dispositif de chauffage,
. une seconde source de chauffage consistant en un fluide caloporteur circulant tout au long de l'intérieur du rotor, et
. une troisième source de chauffage consistant en flux d'air ou de gaz chauffés, injecté dans l'enveloppe intérieure par une arrivée en partie haute de ladite enveloppe.

Avantageusement, la température de ces trois sources de chauffage est régulée par un unique dispositif distributeur et échangeur thermique entre ces trois sources de chauffage. La première source de chauffage est assurée par une circulation de gaz à partir d'une chambre de chauffe, dans une pluralité de carneaux disposés autour de la paroi de l'enveloppe intérieure et évacués par un conduit de cheminée. Les gaz malodorants dégagés dans l'enveloppe intérieure peuvent être évacués par un conduit d'évacuation débouchant en partie haute de ladite enveloppe, qui est muni d'un dispositif de mise en dépression, et sont injectés dans la chambre de chauffe pour y être brûlés, pyrolysés et réutilisés par la première source de chauffage comme gaz caloporteur ou comme réchauffeur de liquide caloporteur destiné au séchage final ou au préchauffage des matières premières intrantes.

Avantageusement, la puissance du brûleur est régulée en automatique suivants les quantités variables, en cours de cycle, de gaz à brûler et à pyrolyser qui sont injectés après oxydation dans la chambre de chauffe, suivant le positionnement d'un équipement de type lanterne disposé en face du brûleur destiné à augmenter la turbulence des gaz brûlés et ainsi à augmenter leur temps de séjour, au moins 2,5 seconde, dans la chambre de chauffe à une température variant entre 750° et 1850° C.

De plus, au moins deux carneaux peuvent comporter chacun au moins une aiguille de récupération de chaleur, les aiguilles de différents carneaux communiquant entre elles par des tubes coaxiaux biflux dans lesquels circulent un fluide caloporteur dont le flux est commandé par des vannes, et la température du fluide caloporteur circulant dans les aiguilles de récupération de chaleur, est contrôlée par le dispositif distributeur et échangeur thermique.

D'autre part, le dispositif selon l'invention comporte au moins un dispositif à ultrasons disposé de manière à pouvoir émettre des ultrasons dans l'enveloppe intérieure, ainsi qu'au moins un dispositif d'émission de champs magnétiques disposé de manière à diffuser des champs magnétiques dans l'enveloppe intérieure.

Avantageusement, le rotor peut être muni d'une pluralité de bras disposés le long du rotor, ces bras étant constitués d'une palette de malaxage, d'une tête de broyage et de malaxage circonférentiels et d'une aube de malaxage longitudinale.

Enfin, le dispositif selon l'invention peut comporter une unité centrale de contrôle de la pression, la température, la vitesse de rotation du rotor et l'hygrométrie de l'intérieur de l'enveloppe intérieure, et de commande de la puissance des différentes sources de chauffage et de la vitesse du rotor, à partir de données entrées, ainsi que le déclenchement du dispositif à ultrasons et du dispositif d'émission de champs magnétiques. En particulier, l'unité centrale peut déclencher automatiquement le dispositif à ultrasons lorsque la puissance développée par le moteur entraînant le rotor à une vitesse déterminée, dépasse une valeur prédéterminée.

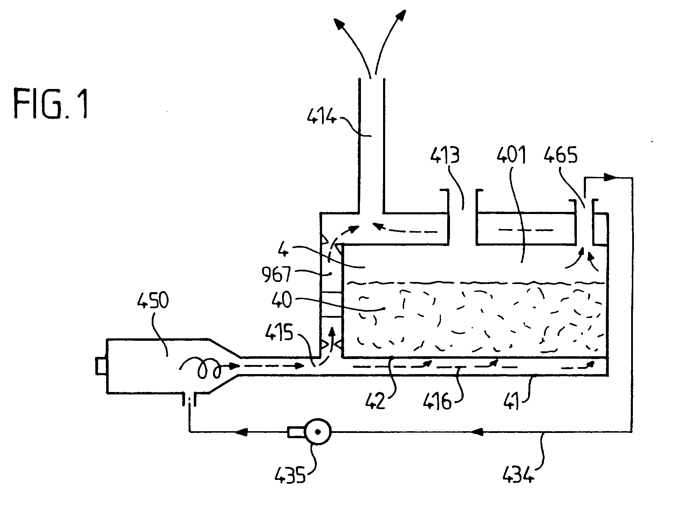

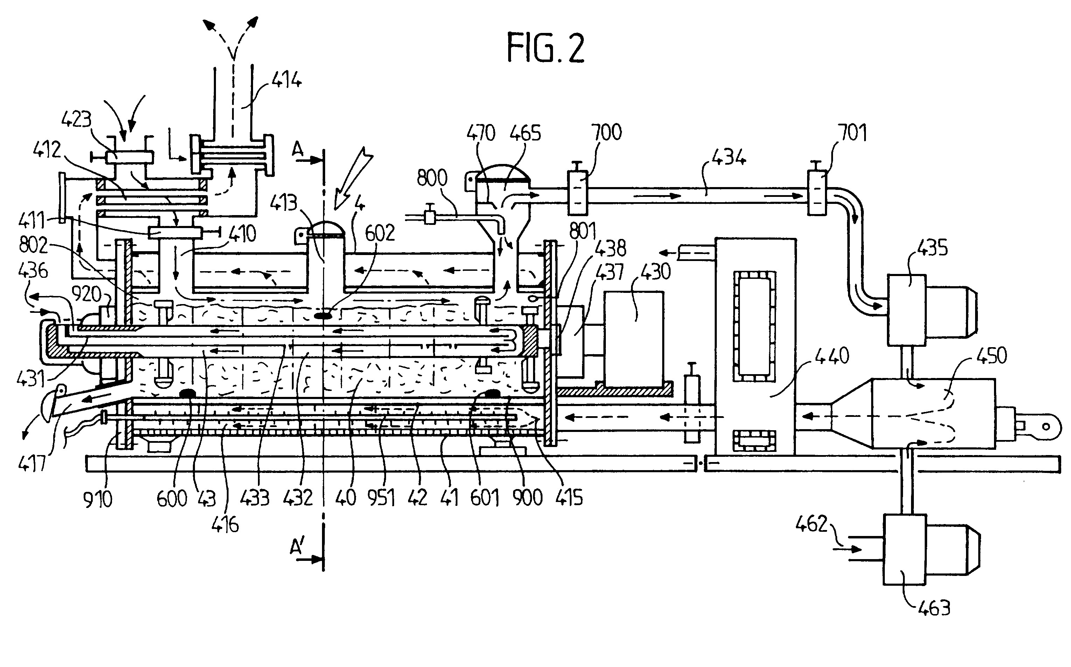

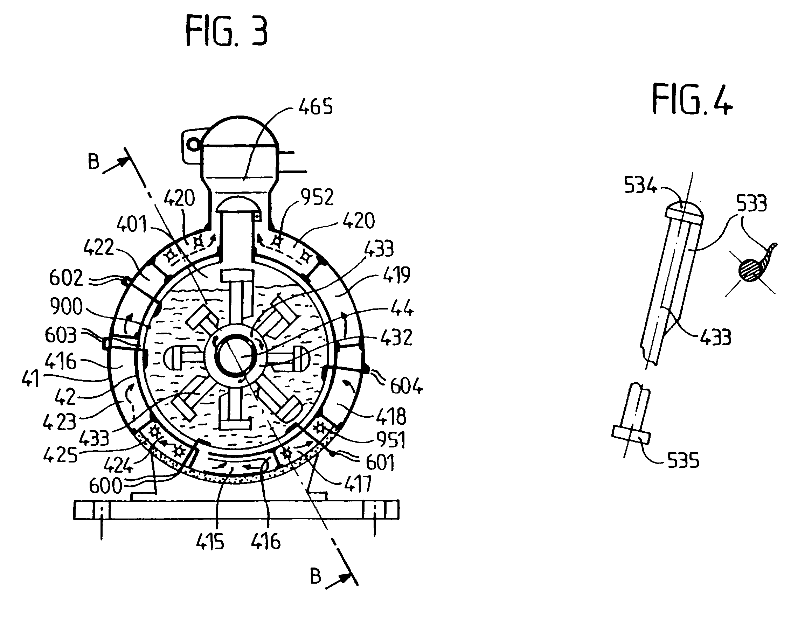

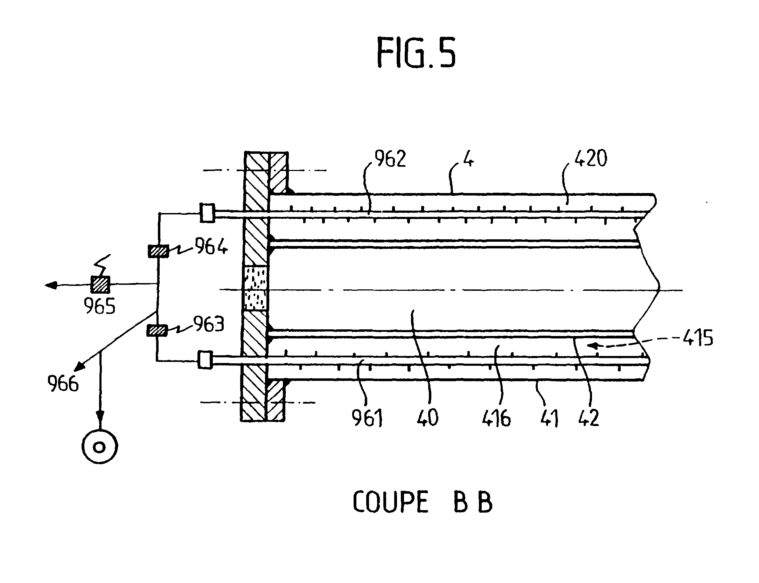

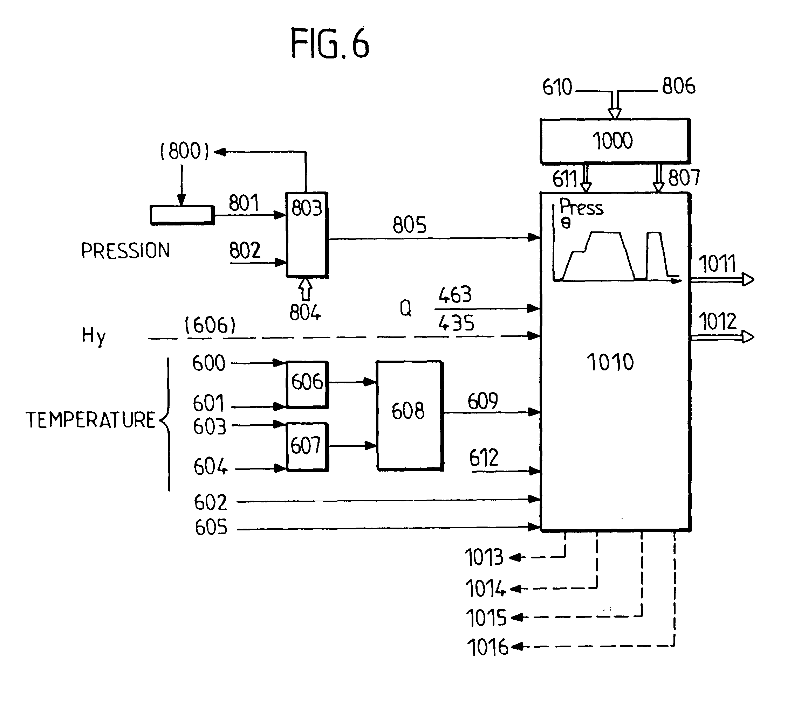

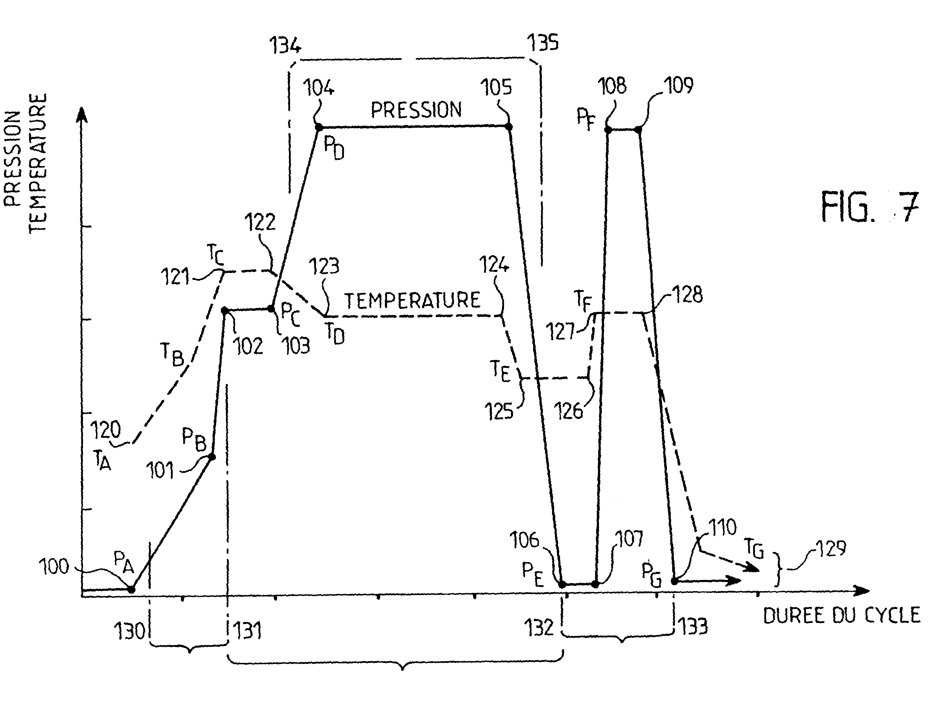

La présente invention sera mieux comprise et des caractéristiques et avantages supplémentaires apparaîtront à la lumière de la description détaillée qui va suivre, illustrée par les figures suivantes :
. la figure 1 représente un vue en coupe longitudinale général d'un dispositif selon la présente invention,
. la figure 2 représente une vue en coupe longitudinale détaillée d'un mode de réalisation du dispositif selon l'invention,
. la figure 3 représente une vue en coupe selon l'axe AA' du dispositif de la figure 2,
. la figure 4 représente le détail d'un bras du rotor du dispositif selon l'invention.
. la figure 5 représente une vue en coupe du système de récupération de l'énergie du dispositif selon l'invention,
. la figure 6 représente un exemple de dispositif de contrôle et de commande du dispositif des figures 2 et 3, et
. la figure 7 représente un diagramme de variation des paramètres au cours d'un exemple de mise en oeuvre d'un procédé de transformation de matière organique végétale et animale par le réacteur selon la présente invention.

Dans la description qui suit, les mêmes éléments présents dans les différentes figures conservent les mêmes références numériques.

Sur la figure 1 est représentée la structure général d'un dispositif de traitement et de transformation de matière organique selon l'invention. Ce dispositif 4 comporte un générateur d'énergie muni d'une chambre de chauffe 450 qui alimente un volume entre une enveloppe intérieure 42 et une enveloppe extérieure 41 du réacteur 4, ces deux enveloppes étant de préférence cylindriques. Les gaz soufflés par la chambre de chauffe sont destinés à chauffer la matière 40 à l'intérieur de l'enveloppe 42, en circulant autour de cette enveloppe dans des carneaux pour être évacués par la cheminée d'évacuation 414. Le réacteur comporte une arrivée 413 pour le chargement dans l'enveloppe intérieure 42 de la matière 40 à transformer, et une évacuation 465 des gaz présents dans l'enveloppe intérieure 42. Il est d'autre part muni d'un système de conduits 434 commandé par un ventilateur de mise en dépression 435 qui permet d'évacuer les gaz hors de l'enveloppe intérieure en 465 et de les injecter dans la chambre de chauffe pour qu'ils y soient brûlés par pyrolyse et réintroduits dans le volume entre les enveloppes. Les traitements biotechnologiques dégagent en effets des gaz malodorants mélangés à la vapeur d'eau produite dans la phase de déshydratation.

La figure 2 représente une vue en coupe plus détaillée d'un mode de réalisation du dispositif selon l'invention de type réacteur. On y retrouve la chambre de chauffe 450 alimentant les enveloppes extérieure et intérieure 41 et 42, la cheminée d'évacuation 414, le conduit de chargement de matière 413, l'évacuation 465 des gaz intérieurs, et le système de transfert de gaz 434 commandé par le ventilateur 435. La figure 3 représente le même dispositif vue en coupe selon l'axe AA' de la figure 2.

Une des caractéristiques principale du réacteur selon l'invention est qu'il est muni de trois sources de chauffage différentes qui permettent un chauffage modulé indirect, homogène, régulier et progressif de la matière à l'intérieur du réacteur.

La première source de chauffage consiste en une chambre de chauffe 450 alimentant en gaz chauds des carneaux autour de l'enveloppe intérieure 42. Les gaz arrivant en 415 circulent dans le carneau inférieur 416, passe en biflux en 419 et 422 pour ressortir à la partie haute dans l'alvéole commune 420, avant d'être évacués par la cheminée 414. Parallèlement, le malaxage réalisé par le rotor malaxeur 43 entraîné par le moteur 430, permet de garantir la distribution de chaleur dans la matière à partir de la paroi de l'enveloppe 42. Cette première source de chauffage peut être améliorée grâce à des aiguilles de récupération d'énergie 951 implantées dans le volume 416 et les carneaux 417 et 424, et qui améliorent la stabilisation et l'homogénéité des températures dans le réacteur. Les aiguilles de la partie haute du carneau 420 reliées aux aiguilles de la partie basse régularisent l'échange thermique de la partie haute 401 du réacteur, et favorisent la déshydratation du produit en phase de dépressurisation. A la surface interne de l'enveloppe extérieure, peut être disposé un élément réfractaire 425 de type céramique pour favoriser le rayonnement thermique vers la matière chauffée, tout en protégeant l'enveloppe extérieure 41 du flux de gaz chaud et d'une température élevée.

La deuxième source de chauffage est constituée par le rotor malaxeur 43 à l'intérieur et le long duquel circule un fluide caloporteur. De préférence, ce fluide caloporteur est injecté en bout d'arbre en 431 via un conduit central, est diffusé en bout et au centre du rotor 43 par des buses d'injection 433, et est évacué en bout d'arbre en 436. Ce système de chauffage permet de chauffer en son centre la matière dans laquelle est noyé le rotor, et assure ainsi une distribution homogène et régulière de chaleur.

. La troisième source de chauffage est constituée par un balayage en surface de la surface libre de la matière, par de l'air frais ou du gaz, chauffé à la température de la matière, et injecté en 410. Cet apport d'air ou de gaz chaud assure le chauffage de la matière en partie supérieure et complète l'homogénéité de la distribution de chaleur dans la matière, évitant ainsi les strates de températures à l'intérieur de la matière. D'autre part, il favorise la vaporisation et le maintien de la température de la vapeur d'eau extraite de la matière en phase de déshydratation et refroidissement de l'enveloppe intérieure. De préférence, l'air ou le gaz injecté en 410 est chauffé par l'intermédiaire d'un échangeur de température 412 avec le volume entre les enveloppes 41 et 42, situé en partie supérieure du réacteur.

Une autre caractéristique importante de la présente invention, déjà évoquée plus haut, est que, durant les phases de dépressurisation et de déshydratation, les gaz malodorants dégagés par la matière lors des traitements biotechnologiques, l'air ou les gaz de chauffage en surface et la vapeur d'eau produite, peuvent être évacués par l'évacuation 465 de type cloche, et le système de conduits d'évacuation 434 grâce au ventilateur de dépressurisation 435. Ces gaz sont ensuite brûlés et pyrolysés dans la chambre de chauffe 450 et réutilisés par la première source de chauffage du volume 416, comme gaz caloporteur ou comme réchauffeur de liquide caloporteur destiné au séchage final ou au préchauffage des matières premières intrantes.

La pressurisation de l'enveloppe intérieure est réalisée de préférence par l'injection de gaz neutre ou simples, et/ou de gaz spéciaux, au centre de la cloche 465 par l'arrivée 800 au dessous du venturi 470, afin d'éviter la projection de matière dans la ligne 434 en phase de dépressurisation et les chocs thermiques sur la vanne 700.

Le rotor muni de bras assure les fonction de broyage, malaxage, trituration, agitation et vidange. Pour cela, comme illustré par la figure 4, chaque bras est avantageusement constitué d'une palette de malaxage 534, d'une tête de broyage et malaxage circonférentiels 535, et d'une aube de malaxage longitudinal 533. Cette dernière permet également la vidange du produit final par le conduit d'évacuation en fin de procédé, en inversant le sens de rotation du rotor. La mise en mouvement dans un sens ou dans l'autre du rotor est effectuée via un réducteur et son bloc palier, ainsi qu'un système d'étanchéité 437 assurant le confinement sécurisé de l'entraînement du rotor 43 en rotation, par le moteur 430 commandé en variation de vitesse par le dispositif de commande décrit plus bas.

Avantageusement, la puissance du brûleur est régulée en automatique - suivants les quantités variables, en cours de cycle, de gaz à brûler et à pyrolyser qui sont injectés après oxydation dans la chambre de chauffe, suivant le positionnement d'un équipement de type lanterne (non représenté sur les figures) disposé en face du brûleur destiné à augmenter la turbulence des gaz brûlés et ainsi à augmenter leur temps de séjour (au moins 2,5 seconde) dans la chambre de chauffe à une température variant entre 750° et 1850° C. Ce réglage détermine également la qualité parfaite de la pyrolyse des gaz.

Pour la maintenance du réacteur, l'enveloppe intérieure 42 est avantageusement protégée par une chemise inoxydable interne 900 qui peut être extraite et remplacée après retrait du bloc palier 437, de l'élément d'étanchéité arrière 920, et de la plaque de tête 910.

Selon l'invention, la mise en pression de l'enceinte de confinement (enveloppe intérieure 42) devant être capable de monter à plus de 10 bar, il est nécéssaire de réaliser l'étanchéité à ces valeurs de pression des conduits débouchant dans l'enveloppe intérieure. Notamment, l'obturation des conduits d'arrivée et d'évacuation 410 et 465 est réalisée par des dispositifs de vannes dites « à double jonc » 411 et 700 en liaison directe avec l'enceinte de confinement. Ces dispositifs sont sujet à des contraintes thermiques et à des salissures dues aux particules de matières risquant d'atténuer leur étanchéité et de perturber le procédé de traitement et de transformation de la matière dans le réacteur. Pour pallier à ce problème, des sectionnements 423 et 701 garantissant une double étanchéité, sont disposés respectivement en amont de l'échangeur thermique 412 et sur le circuit de déshydratation 434.

La figure 5 représente les aiguilles de récupération d'énergie et de stabilisation 951 implantées à l'intérieur du volume 416 délimité par les deux enveloppes 41 et 42. Les aiguilles de la partie inférieure 961 sont montées dans les carneaux 417 et 424, et les aiguilles de la partie supérieure 962 sont installées dans le carneau supérieur 420 (voir figure 3). La liaison entre les aiguilles inférieures et supérieures est réalisée par des tubes coaxiaux biflux 966 pour permettre la circulation de chaleur entre les aiguilles. Cette liaison comporte deux électrovannes 963 et 964, et une électrovanne 965 assure la circulation du fluide caloporteur dans le bloc d'échange thermique 440. L'ouverture simultanée des vannes 963 et 964 permet l'apport d'énergie à la partie haute 420, et est essentiellement mise en oeuvre dans la phase de déshydratation du procédé pour stabiliser la température inférieure et favoriser la température de la surface libre et contrôler la température de la surface libre de la matière pour la vaporisation de l'eau contenue dans le produit final en 401.

Comme cela est illustré sur la figure 3, le contrôle de la température tout au long de la mise en oeuvre du procédé de transformation de la matière par le réacteur, est effectué par des capteurs de températures disposés de préférence à la surface interne de l'enveloppe intérieure. Par exemple, des capteurs 603 et 604 disposés à mi hauteur permettent de contrôler la température au centre de la matière, et la sonde 602 disposée sur la partie supérieure de l'enveloppe permet de contrôler la température au voisinage de la surface libre de la matière.

De préférence, un ou plusieurs dispositifs de préchauffage et de calibrage par broyage de la matière (non représentés sur les figures) sont disposés en amont du conduit de chargement de matière 413 dans le réacteur. Ces dispositifs peuvent être de forme conique et comporter un rotor muni d'une vis sans fin raclant les paroi afin que la matière n'adhère pas à ces parois, tout en étant chauffée à des températures pouvant atteindre 80°c. De préférence, le chauffage de ces dispositifs est assuré à partir de la chambre de chauffe 450.

Avantageusement, le réacteur selon l'invention est muni d'un dispositif à ultrasons (non représenté sur les figures) permettant l'émission d'ultrasons à l'intérieur de l'enceinte de confinement afin de, par exemple, empêcher la prise de masse de la matière lors de certaines phases du procédé de traitement et de transformation de la matière.

De plus, le réacteur peut être muni d'un dispositif d'émission de champ magnétiques (non représenté sur les figures) qui peuvent améliorer les réaction durant certaines phases du procédé.

Dans un mode de réalisation différent, le chauffage de l'enveloppe intérieure peut être réalisé par la circulation d'un fluide caloporteur au lieu de gaz. Pour cela, l'enveloppe intérieure peut être en contact sur sa surface externe avec un conduit dans lequel circule le fluide caloporteur dont la température est commandée par un dispositif de chauffe, et dont la surface de contact avec la paroi de l'enveloppe intérieure épouse celle de l'enveloppe, de manière à maximiser les transferts de chaleur entre le conduit et la paroi de l'enveloppe.

Un exemple de dispositif de commande du réacteur des figures précédentes est décrit ci-dessous en référence à la figure 6.

Il comporte une prélogique 803 de contrôle de la pression qui reçoit en 801 et 802 les informations de valeurs de pression mesurées par des capteurs, et contrôle la pressurisation en 800, représentatif de la pression en partie haute de l'enceinte, en fonction de la pression de consigne programmée en 804. La liaison 805 transmet l'information de pression à l'unité centrale 1010.

Le bloc de contrôle de température 608 en liaison 609 avec l'unité centrale 1010 fournit les données d'information concernant la température de la matière par la prélogique 606 recevant en 600 et 601 les informations de température inférieures à partir des capteurs sur l'enceinte. La prélogique 607 reçoit en 603 et 604 les informations des températures du centre de la matière. La valeur de la température de la surface libre de la matière est transmise directement en 602 à l'unité centrale 1010 pour la commande des différentes phases du procédé mis en oeuvre, notamment durant la phase fondamentale de déshydratation. Par la liaison 605, la température des gaz chauds d'entrée en 415 qui caractérise la source chaude d'entrée pour le transformation de la matière est transmise à l'unité centrale 1010.

L'hygrométrie de la matière mesurée à partir de capteurs d'humidité, est transmise directement en 606 dans l'unité centrale 1010.

Afin de définir le programme de traitement de la matière en vue d'obtenir un produit final désiré, une pression de référence et une température prédéterminée sont entrées respectivement en 806 et 610 dans un microprocesseur 1000, pour la commande des consignes de programme concernant la pression 807 et la température 611 en fonction des différentes phases de transformation de la matière et définies par le procédé mis en oeuvre. L'unité centrale 1010 commande les paramètres suivants :
. la puissance de chauffe nécessaire pour assurer la pyrolyse et le réglage de la température d'entrée des gaz en 415 dans le réacteur par la liaison 1013,
. la régulation de la puissance de récupération d'énergie sur le bloc d'échange thermique 440 par la commande 1014,
. la puissance à extraire ou le transfert d'énergie à réaliser d'aiguilles à aiguilles par la commande 1015, et
. la commande 1016 pour le réglage de la température de réchauffage de l'air de balayage en 410.

En fonction de la mise en oeuvre du procédé de transformation de la matière choisi, l'unité centrale 1010 commande en 1011 la vitesse du rotor malaxeur ainsi que la durée de chaque phase de transformation par la commande 1012 comme par exemple : les montées en température, les paliers de stérilisation, les paliers d'hydrolyse et d'homogénéisation, les phases de déshydratation et de refroidissement, les rechargements éventuels, etc..

Durant ces phases de transformation, le débit d'extraction de gaz et de vapeur d'eau produite, est entré dans l'unité centrale en 612 pour être prise en compte pour la commande de puissance en 1013.

Par ailleurs, l'unité centrale 1010 commande l'activation des dispositifs à ultrasons ainsi que des dispositifs d'émission de champs magnétiques à des valeurs et pendant des durées prédéterminées en fonction des phases du procédé choisi.

Avantageusement, l'unité centrale 1010 est prévue pour déclencher automatiquement le dispositif à ultrasons lorsque la puissance développée par le moteur 430 entraînant le rotor 43 à une vitesse déterminée, dépasse une valeur prédéterminée.

Ainsi, un réacteur selon la présente invention permet d'effectuer un traitement de matière organique, végétale et animale, en commandant tous les paramètres physiques comme la pression, la température, la vitesse de rotation du rotor ou l'hygrométrie, indépendamment les uns des autres. Cela permet de réaliser la transformation de la matière traitée en produits nouveaux de type engrais ou aliments, avec destruction de tous les vecteurs contaminants et assure ainsi une qualité bactériologique parfaite rendant ces produits aptes à la consommation humaine. D'autre part, ces produits sont obtenus sans résidus, et sans pollution de l'environnement, et sans consommation excessive d'énergie.

Afin d'illustrer l'utilisation qui peut être faite du réacteur selon l'invention, un exemple de procédé de traitement et de transformation de matière organique est décrit ci après, illustré par la figure 7.

Ce procédé de traitement et de transformation de matière organique d'origine végétale et/ou animale, en nouveaux produits biologiques, peut comporter les étapes suivantes :
a) calibrage par broyage et préchauffage et malaxage de la matière dans un dispositif de préchauffage et de calibrage avant d'être introduit dans le réacteur en 413 (étape non représentée sur la figure 7),
b) chargement de la matière pré-traitée dans l'enveloppe intérieure 42, et augmentation de la température (T_{A} à T_{B}) et de la pression (P_{A} à P_{B}) (100-101) de la matière, et malaxage à une vitesse comprise entre 5 et 15 t/mn,
c) augmentation progressive de la vitesse de malaxage de l'ordre de 2 à 20 t/mn, et augmentation simultanée de la pression (P_{B} à P_{C}) (101-102) et de la température (T_{B} à T_{C}) (120-121), homogène et progressif, la durée de ces deux première étapes étant de 10 à 60 minutes,
d) stérilisation de la matière à pression (P_{C}) (102-103) et température (T_{C}) (121-122) constantes, et diminution de la vitesse de malaxage à une valeur maintenue constante de l'ordre de 10 t/mn durant ce palier, pendant une durée de 10 à 30 minutes,
e) augmentation de la vitesse de malaxage jusqu'à environ 15 t/mn et de la pression (P_{C} à P_{D}) (103-104), et diminution de la température (T_{C} à T_{D}) (122-123) par l'apport d'un gaz simple ou neutre, ou d'un gaz particulier, dont la température est contrôlée pour suivre celle de la matière (T_{C} à T_{D}),
f) hydrolyse et homogénéisation à vitesse de malaxage augmentée de l'ordre de 10 à 40 t/mn, pression (P_{D}) (104-105) et température (T_{D}) (123-124) constantes,
g) déshydratation de la matière par diminution de la pression (P_{D} à P_{E}) (105-106) et de la température (T_{D} à T_{E}) (124-125), à une vitesse de malaxage réduite constante de l'ordre de 5 à 10 t/mn durant cette étape, par évacuation du mélange des gaz d'exhaure et de la vapeur d'eau par balayage de la surface de la matière par de l'air ou du gaz réchauffé à une température correspondant à celle de la matière, la durée globale de ces trois dernières étapes étant de 4 à 120 minutes,
h) rechargement de matière organique végétale préchauffée et calibrée (dans le cas où la matière organique traitée précédemment est animale), à pression (P_{E}=P_{A}) (106-107) et à température (T_{E}) (125-126) constantes,
i) augmentation progressive de la vitesse de malaxage de l'ordre de 2 à 20 t/mn, et augmentation simultanée de la pression (P_{A} à P_{F}) (107-108) et de la température (T_{E} à T_{F}) (126-127),
j) hydrolyse secondaire et d'homogénéisation à vitesse de malaxage augmentée de l'ordre de 10 à 40 t/mn, pression (P_{F}) (108-109) et température constantes (T_{F}) (127-128), et
k) déshydratation et refroidissement de la matière par diminution simultanée de la pression (P_{G}) (109-110) et de la température (T_{G}) (128-129) par exemple, par injection d'eau glacée, à vitesse de malaxage constante réduite de l'ordre de 5 à 10 t/mn, par évacuation du mélange des gaz d'exhaure et de la vapeur d'eau par balayage de la surface de la matière par de l'air ou du gaz réchauffé à une température correspondant à celle de la matière, la durée de ces trois dernières étapes étant de 30 à 60 minutes.

Avantageusement la matière a subit un traitement aux ultrasons durant les phases de montée en pression, en particulier au moment de la prise de masse. Durant les étapes a), d) et/ou i), la matière a subit un traitement aux ultrasons, et durant l'étape i), au moment où la température atteint la valeur de la température du palier d'hydrolyse de l'étape suivante j), durant toute l'étape j) et une partie de l'étape h), la matière a été soumis à un champ magnétique de l'ordre de 2 à 20 Oe.

Les gaz simples ou neutres utilisés durant ce procédé peuvent être constitués d'azote (N₂) et/ou de gaz carbonique (CO₂).

L'utilisation du dispositif de traitement et de transformation de matière organique selon la présente invention trouve de nombreuses applications, notamment, pour la fabrication de nouveaux produits industriels se présentant sous forme de concentrés alimentaires, pour l'alimentation animale, ou sous forme d'engrais bio-organiques concentrés, ou encore de combustible carbonés de très bonne qualité. Les produits fabriqués par des procédés mis en oeuvre par le dispositif selon l'invention permettent l'alimentation des polygastriques et ruminants, des monogastriques (porcs, volailles, chiens, chats,...), des poissons en piscicultures et aquacultures.

Ce dispositif permet aussi l'exploitation de nouveaux gisements de biomasse tels que pulpes d'olives, de raisins, de légumes, d'agrumes et autres matières de ce type.

En fonction du réglage des différents paramètres de fonctionnement indépendants, ce dispositif permet aussi la production de supports de culture et fertilisants, engrais et adjuvants bio-organiques multiples, de fumure d'entretien et de redressement, de fixation de l'azote minérale et de régénération des terreaux, de reconstruction des ciments colloïdaux et composants humiques structurels, de stabilisation, assainissement et équilibrage de compost de toute origine, et l'inertage des métaux lourds, ainsi que l'élimination des toxiques.

D'autres applications sont possibles en sylviculture, en cultures nouvelles de reconversion comme la pharmacologie, la phytothérapie, la cosmétologie et la parfumerie.

Pour les matières d'origine animale, les retraitements peuvent concerner, par exemple, les matières de industries d'agro-élevage, telles que les élevage bovins, ovins, porcins, pèche, les matières et sous-produits des industries agro-alimentaires, telles que les conserveries, les abattoirs, les laiteries et fromageries, les matières déchets de pisciculture et les sous-produits divers comme les déchets de cuisine, les boues de stations d'épuration, les matières de vidanges...

Pour les matières d'origine végétales, les retraitements peuvent concerner, les matières et sous-produits des industries agro-alimentaires telles que les brasseries, les sucreries, les huileries, les vinifications et pressoirs, les sous-produits des industries du bois et des papeteries.

Grâce au dispositif selon l'invention, on peut fabriquer dans des conditions optimales des substrats de culture pour des souches bactériennes pures, présélectionnées, soit pour en assurer le développement rapide, soit pour procéder au transfert et au développement de telles souches. De même peut-on introduire à très bon marché des nouvelles protéines unicellulaires par fermentation de substrats glucidiques précédemment obtenues par le procédé à partir d'intrants cellulosiques par exemple.

## Revendications

1. Dispositif de traitement et de transformation de matière organique, végétale et/ou animale, comportant une enveloppe extérieure (41) et une enveloppe intérieure (42), l'enveloppe intérieure (42) recevant la matière à traiter et à transformer, un rotor de malaxage (43) entraîné par un moteur (430), un conduit de chargement de matière dans l'enveloppe intérieure (42), un conduit d'évacuation des gaz (465) et au moins un conduit d'injection de gaz (410,800), caractérisé en ce qu'il comporte :
. une première source de chauffage comportant un dispositif de chauffage (450) et un système de conduits (415,416,417,424,419,420) permettant le chauffage de l'enveloppe intérieure par circulation, sur ses parois, de gaz ou d'un fluide caloporteur dont la température est commandée par le dispositif de chauffage (450),
. une seconde source de chauffage consistant en un fluide caloporteur circulant tout au long de l'intérieur du rotor (43), et
. une troisième source de chauffage consistant en flux d'air ou de gaz chauffés, injecté dans l'enveloppe intérieure (42) par une arrivée (410) en partie haute de ladite enveloppe.

2. Dispositif selon la revendication 1, caractérisé en ce que la température de ces trois sources de chauffage est régulée par un unique dispositif distributeur et échangeur thermique (412) entre ces trois sources de chauffage.

3. Dispositif selon la revendication 1 ou 2, caractérisé en ce que la première source de chauffage est assurée par une circulation de gaz à partir d'une chambre de chauffe (450), dans une pluralité de carneaux (416-422) disposés autour de la paroi de l'enveloppe intérieure (42) et évacués par un conduit de cheminée (414).

4. Dispositif selon la revendication 3, caractérisé en ce que les gaz malodorants dégagés dans l'enveloppe intérieure (42) sont évacués par un conduit d'évacuation (434) débouchant en partie haute (465) de ladite enveloppe, qui est muni d'un dispositif de mise en dépression (435), et sont injectés dans la chambre de chauffe (450) pour y être brûlés, pyrolysés et réutilisés par la première source de chauffage comme gaz caloporteur ou comme réchauffeur de liquide caloporteur destiné au séchage final ou au préchauffage des matières premières intrantes.

5. Dispositif selon la revendication 4, caractérisé en ce que la puissance du brûleur est régulée en automatique suivants les quantités variables, en cours de cycle, de gaz à brûler et à pyrolyser qui sont injectés après oxydation dans la chambre de chauffe, suivant le positionnement d'un équipement de type lanterne disposé en face du brûleur destiné à augmenter la turbulence des gaz brûlés et ainsi à augmenter leur temps de séjour, au moins 2,5 seconde, dans la chambre de chauffe à une température variant entre 750° et 1850° C.

6. Dispositif selon la revendication 3, 4 ou 5, caractérisé en ce que au moins deux carneaux (416-422) comportant chacun au moins une aiguille de récupération de chaleur (961,962), les aiguilles de différents carneaux communiquant entre elles par des tubes coaxiaux biflux (966) dans lesquels circulent un fluide caloporteur dont le flux est commandé par des vannes (963-965).

7. Dispositif selon la revendication précédente, caractérisé en ce que la température du fluide caloporteur circulant dans les aiguilles de récupération de chaleur, est contrôlée par le dispositif échangeur thermique (450).

8. Dispositif selon l'une quelconque des revendications précédentes, caractérisé en ce qu'il comporte une arrivée de gaz (800) en partie haute de l'enveloppe intérieure (42) permettant l'augmentation de la pression dans ladite enveloppe.

9. Dispositif selon l'une quelconque des revendications précédentes, caractérisé en ce qu'il comporte au moins un dispositif à ultrasons disposé de manière à pouvoir émettre des ultrasons dans l'enveloppe intérieure (42).

10. Dispositif selon l'une quelconque des revendications précédentes, caractérisé en ce qu'il comporte au moins un dispositif d'émission de champs magnétiques disposé de manière à diffuser des champs magnétiques dans l'enveloppe intérieure (42).

11. Dispositif selon l'une quelconque des revendications précédentes, caractérisé en ce que le rotor (43) est muni d'une pluralité de bras disposés le long du rotor, ces bras étant constitués d'une palette de malaxage (534), d'une tête de broyage et de malaxage circonférentiels (535) et d'une aube de malaxage longitudinale (533).

12. Dispositif selon l'une quelconque des revendications précédentes, caractérisé en ce qu'il comporte une unité centrale (1010) de contrôle de la pression, la température, la vitesse de rotation du rotor et l'hygrométrie de l'intérieur de l'enveloppe intérieure (42), et de commande de la puissance des différentes sources de chauffage et de la vitesse du rotor, à partir de données entrées.

13. Dispositif selon les revendications 9 et 12, caractérisé en ce que l'unité centrale (1010) commande le déclenchement du dispositif à ultrasons.

14. Dispositif selon les revendications 10 et 12, caractérisé en ce que l'unité centrale (1010) commande le déclenchement du dispositif d'émission de champs magnétiques.

15. Dispositif selon la revendication 13, caractérisé en ce que l'unité centrale (1010) déclenche automatiquement le dispositif à ultrasons lorsque la puissance développée par le moteur (430) entraînant le rotor (43) à une vitesse déterminée, dépasse une valeur prédéterminée.

## Patentansprüche

1. Vorrichtung zur Behandlung und Umwandlung von pflanzlichen und/oder tierischen organischen Materialien, die ein äusseres Gehäuse (41) und ein inneres Gehäuse (42) umfasst, wobei das innere Gehäuse (42) das zu behandelnde und umzuwandelnde Material, einen von einem Motor (430) angetriebenen Rührrotor (43), ein Rohr zum Einfüllen des Materials in das innere Gehäuse (42), ein Gasableitungsrohr (465) und zumindest ein Rohr zum Einblasen von Gas (410, 800) aufnimmt, dadurch gekennzeichnet, dass sie umfasst:
. eine erste Beheizungsquelle mit einer Heizvorrichtung (450) und einem Röhrensystem (415, 416, 417, 424, 419, 420), die das Aufheizen des inneren Gehäuses durch ein an seinen Wänden umlaufendes Gas oder ein Wärmeübertragungsfluid gestatten, deren Temperatur von der Heizvorrichtung (450) gesteuert wird,
. eine zweite Beheizungsquelle, die aus einem Wärmeübertragungsfluid besteht, das das Innere des Rotors (43) über dessen ganze Länge durchströmt, und
. eine dritte Beheizungsquelle, die aus einem Strom aufgeheizter Luft oder aufgeheizten Gases besteht, die durch eine Zuleitung (410) im oberen Abschnitt des inneren Gehäuses (42) in das besagte Gehäuse eingeblasen werden.

2. Vorrichtung nach Anspruch 1, dadurch gekennzeichnet, dass die Temperatur dieser drei Beheizungsquellen von einer einzigen Vorrichtung zur Wärmeverteilung und zum Wärmeaustausch (412) zwischen diesen drei Beheizungsquellen gesteuert wird.

3. Vorrichtung nach Ansprüchen 1 oder 2, dadurch gekennzeichnet, dass die erste Beheizungsquelle durch einen Gasumlauf gewährleistet wird, der von einer Heizkammer (450) ausgeht, in einer Vielzahl von um die Wand des inneren Gehäuses (42) herum angeordneten Heizkanälen (416-422) verläuft und durch ein Abzugsrohr (414) abgeleitet wird.

4. Vorrichtung nach Anspruch 3, dadurch gekennzeichnet, dass die im inneren Gehäuse (42) freigesetzten, übelriechenden Gase durch ein Ableitungsrohr (434) abgezogen werden, das aus dem oberen Abschnitt (465) des benannten Gehäuses herausführt und mit einer Unterdruckvorrichtung (435) ausgerüstet ist, und in die Heizkammer (450) eingeblasen werden, um dort verbrannt, pyrolysiert und von der ersten Beheizungsquelle als Wärmeübertragungsgas oder als Wiederhitzer für die zur abschliessenden Trocknung bestimmte Wärmeübertragungsflüssigkeit oder aber zur Vorwärmung der eintretenden Rohmaterialien wiederverwendet zu werden.

5. Vorrichtung nach Anspruch 4, dadurch gekennzeichnet, dass die Brennerleistung automatisch entsprechend den im Prozessverlauf veränderlichen Mengen an zu verbrennendem und zu pyrolysierendem Gas, die nach Oxidation in die Heizkammer eingeblasen werden, und entsprechend der Positionierung einer Ausrüstung vom Typ eines durchbrochenen Schornsteinaufsatzes, der dem Brenner gegenüber angeordnet und dafür bestimmt ist, die Turbulenz der Abgase zu erhöhen und somit ihre Verweilzeit von zumindest 2,5 s in der Heizkammer zu verlängern, auf eine zwischen 750 und 1850 °C variierende Temperatur eingeregelt wird.

6. Vorrichtung nach Ansprüchen 3, 4 oder 5, dadurch gekennzeichnet, dass zumindest zwei Heizkanäle (416-422) zumindest je eine Wärmerückgewinnungslanze (961, 962) aufweisen, wobei die Lanzen verschiedener Kanäle durch koaxiale Gegenstromrohre (966) miteinander in Verbindung stehen, in denen ein Wärmeübertragungsfluid umläuft, dessen Strömung von Ventilen (963-965) gesteuert wird.

7. Vorrichtung nach dem vorangehenden Anspruch, dadurch gekennzeichnet, dass die Temperatur des in den Wärmerückgewinnungslanzen umlaufenden Wärmeübertragungsfluids von der Wärmetauschervorrichtung (450) überwacht wird.

8. Vorrichtung nach einem der vorangehenden Ansprüche, dadurch gekennzeichnet, dass sie eine Gaszuleitung (800) im oberen Abschnitt des inneren Gehäuses (42) umfasst, die die Erhöhung des Druckes in dem benannten Gehäuse erlaubt.

9. Vorrichtung nach einem der vorangehenden Ansprüche, dadurch gekennzeichnet, dass sie zumindest eine Ultraschallvorrichtung umfasst, die so angeordnet ist, dass Ultraschallwellen in das innere Gehäuse (42) gesendet werden können.

10. Vorrichtung nach einem der vorangehenden Ansprüche, dadurch gekennzeichnet, dass sie zumindest eine Vorrichtung zur Aussendung von Magnetfeldern umfasst, die so angeordnet ist, dass Magnetfelder in das innere Gehäuse (42) eingestreut werden können.

11. Vorrichtung nach einem der vorangehenden Ansprüche, dadurch gekennzeichnet, dass der Rotor (43) mit einer Vielzahl von Armen ausgerüstet ist, die entlang des Rotors angeordnet sind, wobei diese Arme aus einem Rührflügel (534), einem peripheren Mahl- und Rührkopf (535) und einer Längsrührschaufel (533) bestehen.

12. Vorrichtung nach einem der vorangehenden Ansprüche, dadurch gekennzeichnet, dass sie eine Zentraleinheit (1010) für die Ueberwachung des Druckes, der Temperatur, der Rotorumlaufgeschwindigkeit und der Feuchtigkeitsmessung im Inneren des inneren Gehäuses (42) sowie für die Steuerung der Leistung der verschiedenen Beheizungsquellen und der Rotorumlaufgeschwindigkeit auf der Grundlage eingegebener Daten umfasst.

13. Vorrichtung nach den Ansprüchen 9 und 12, dadurch gekennzeichnet, dass die Zentraleinheit (1010) das Einschalten der Ultraschalleinheit steuert.

14. Vorrichtung nach den Ansprüchen 10 und 12, dadurch gekennzeichnet, dass die Zentraleinheit (1010) das Einschalten der Vorrichtung zur Aussendung von Magnetfeldern steuert.

15. Vorrichtung gemäss Anspruch 13, dadurch gekennzeichnet, dass die Zentraleinheit (1010) automatisch die Ultraschallvorrichtung einschaltet, wenn die Leistung, die der den Rotor (43) mit einer bestimmten Geschwindigkeit antreibende Motor (430) entwickelt, einen vorbestimmten Wert übersteigt.

## Claims

1. A device for processing and converting organic plant and/or animal material, including an outer casing (41) and an inner casing (42), the inner casing (42) being designed for receiving the material to be processed and converted, a kneading rotor (43) driven by a motor (430), a pipe for feeding the material into the inner casing (42), a gas discharge chamber (465) and at least one gas injection pipe (410, 800), which is characterised in that it includes :
- a first heat source including a heating device (450) and system of ducts (415, 416, 417, 424, 419, 420) for heating the inner casing by a heat-transfer gas or fluid, of which the temperature is controlled by a heating device (450) and which circulates along the walls of the casing;
- a second heat source consisting of a heat-transfer fluid circulating over the full length of the inside of the rotor (43); and
- a third heat source consisting of a heated air or gas flow, injected into the inner casing (42) via an inlet (410) in the upper part of said casing.

2. A device according to claim 1, characterised in that the temperature of these three heat sources is controlled by a single distribution and heat exchange system (412) provided for the three heat sources.

3. A device according to claim 1 or 2, characterised in that the first heat source is provided for by gas arriving from a combustion chamber (450) and circulating in a plurality of ducts (416 - 422) arranged around the wall of the inner casing (42) and evacuated via a stack (414).

4. A device according to claim 3, characterised in that the foul-smelling gases produced within the inner casing (42) are evacuated via the discharge pipe (434) connected to an upper portion (465) of said casing, which is provided with a low-pressure generating means (435) and are injected into the combustion chamber (450) to be burned and pyrolysed therein, and reused by the first heat source as heat-transfer gas or for re-heating the heat-transfer fluid used for the final drying or for the preheating of the material fed to the device.

5. A device according to claim 4, characterised in that, in order to take into account the fact that the amount of gas to be burned and pyrolysed - and which is re-injected after its oxidation - in the combustion chamber varies along each cycle, the output of the burner is controlled automatically, by the positioning of a device of the screen type placed opposite the burner and designed to increase the turbulence of the burned gases and thus to increase their residence time in the combustion chamber, to at least 2.5 seconds, at a temperature varying between 750 °C and 1850 °C.

6. A device according to claim 3, 4 or 5, characterised in that at least two ducts (416 - 422) include each one at least one rod (961, 962) for recovering heat, the rods of the different ducts communicating between them by coaxial double-flow tubes (966) in which flows a heat-transfer fluid, of which the flow is controlled by valves (963 - 965).

7. A device according to the preceding claim, characterised in that the temperature of the heat-transfer fluid circulating in the heat recovery rods, is controlled by the distribution and heat-exchange device (450).

8. A device according to any one of the preceding claims, characterised in that it includes a gas inlet (800) in the upper part of the inner casing (42), which makes it possible to increase the pressure in said casing.

9. A device according to any one of the preceding claims, characterised in that it includes at least one ultrasonic device positioned in such a manner as to direct ultrasounds within the inner casing (42).

10. A device according to any one of the preceding claims, characterised in that it includes at least one device generating magnetic fields positioned in such a manner as to generate magnetic fields within the inner casing (42).

11. A device according to any one of the preceding claims, characterised in that the rotor (43) is provided with a plurality of arms arranged along the rotor, these arms being comprised of a circumferential mixer plough (534), of a circumferential shredding/kneading head (535) and of a longitudinal kneading blade (533).

12. A device according to any one of the preceding claims, characterised in that it includes a central control unit -(1010) for controlling the pressure, the temperature, the rotational speed of the rotor and the moisture within the inner envelope (42) and, further, for controlling the output of the different heat sources and the speed of the rotor, based on input data.

13. A device according to claims 9 and 12, characterised in that the central control unit (1010) controls the actuation of the ultrasonic device.

14. A device according to claims 10 and 12, characterised in that the central control unit (1010) controls the actuation of the device generating magnetic fields.

15. A device according to claim 13, characterised in that the central unit (1010) starts automatically the ultrasonic device when the power required from the motor (430) driving the rotor (43) at a given speed exceeds a predetermined value.
